## Europäisches Patentamt
## European Patent Office
## Office européen des brevets

(19)

(11) Numéro de publication: **0 039 300**
**A1**

(12)

# DEMANDE DE BREVET EUROPEEN

(21) Numéro de dépôt: **81420057.2**

(22) Date de dépôt: **16.04.81**

(51) Int. Cl.³: **A 61 C 3/02**

(30) Priorité: **25.04.80 FR 8009922**

(43) Date de publication de la demande:
**04.11.81 Bulletin 81/44**

(84) Etats contractants désignés:
**AT BE CH DE GB IT LI SE**

(71) Demandeur: **Rigaud, Michel**
**3 Chemin du Pensionnat**
**F-69350 La Mulatiere(FR)**

(72) Inventeur: **Rigaud, Michel**
**3 Chemin du Pensionnat**
**F-69350 La Mulatiere(FR)**

(74) Mandataire: **Maisonnier, Jean**
**28 rue Servient**
**F-69003 Lyon(FR)**

(54) **Procédé et outillage pour la standardisation de la préparation des dents en vue de la pose des couronnes.**

(57) On taille une gorge 12 sur les faces latérales de la dent, à une distance constante de la gencive 11 à la base scellée de la dent, puis on utilise une fraise d'ébauche en forme de diabolo 17 pour usiner successivement le volume cuspidien 9 délimité au-dessus de la gorge 12, puis le volume cervical 10 délimité au-dessous de la gorge 12. En usinant le volume cervical 10, on usine en même temps un trottoir horizontal inférieur qui est utilisé comme appui pour le guidage de la fraise de finition. Le volume sphérique approché de la dent est ainsi transformé en un tronc de cône droit approché sur lequel on met en place la couronne prothétique.

FIG.25

EP 0 039 300 A1

La présente invention concerne un procédé et un outillage pour le taillage des dents en vue de la pose des couronnes.

On sait que le travail de préparation à effectuer sur une dent préalablement à la pose d'une couronne peut être vu comme la transformation d'un volume sphérique approché amputé à la base et au sommet d'un segment sphérique, la base étant scellée sur un plan et le sommet étant libre, en un tronc de cône droit approché dont la grande base correspond à la base scellée du volume précité.

En effet, pour reconstituer une dent à l'aide d'une couronne prothétique, il est nécessaire de transformer le volume sphérique approché de la dent en un tronc de cône droit approché. On élimine ainsi une partie de la substance dentaire périphérique pour la remplacer par un matériau de reconstitution.

Pour usiner le volume sphérique approché et le transformer en cône droit approché, on distingue sur la dent quatre faces verticales définies en fonction de la situation anatomique de cet organe à l'intérieur de son environnement, c'est-à-dire à l'intérieur de la cavité buccale, et une face horizontale libre.

Chacune des quatre faces verticales correspond, en fait, à un segment sphérique de la surface sphérique approchée. On désigne ces faces de la manière suivante :

- La face vestibulaire est tournée du côté de la joue.

- La face linguale ou palatine est tournée du côté de la langue..

- La face distale est orientée vers la dent postérieure de l'arcade dentaire à laquelle appartient la dent considérée.

- La face mésiale est orientée vers la dent antérieure de l'arcade dentaire à laquelle appartient la dent considérée.

Dans la mesure où on associe chacune de ces faces à un plan, les quatre plans correspondants sont parallèles à l'axe de la dent. Cet axe correspond lui-même sensiblement à l'axe d'insertion de la future couronne prothétique.

On distingue en outre sur la dent une face occlusale ou cuspidienne, qui est la face supérieure de la dent. Cette face horizontale libre est dans un plan sensiblement perpendiculaire à l'axe général de la dent.

La face horizontale correspondant à la base du volume sphérique approché, qui est la face scellée, est située à la jonction de la dent pénétrant dans la gencive et de l'os supportant cette dent.

Une ligne de plus grand contour du volume sphérique approché, située sensiblement à mi-hauteur des faces vestibulaire , linguale, distale et mésiale, définit un plan sensiblement perpendiculaire à l'axe général de la dent. Les molaires et les prémolaires sont convexes sur toutes leurs faces. Les 12 dents du groupe incisivocanin sont partiellement concaves sur leur face linguale pour les dents du bas, et sur leur face palatine pour les dents du haut. Le plan ainsi défini délimite lui-même deux zones anatomiques :

- le volume cuspidien, ou occlusal, situé au-dessus de ce plan, intéresse la face horizontale libre du volume sphérique approché ;

- le volume cervical ou gingival, situé au-dessous de ce plan intéresse la face horizontale scellée du volume sphérique approché.

Le volume cuspidien et le volume cervical forment ensemble le volume coronnaire, volume sphérique approché à axe médian vertical.

Les techniques de reconstitutions métalliques par couronnes prothétiques modernes nécessitent des caractéristiques rigoureuses en ce qui concerne la convergence des flancs, et les limites des tailles périphériques.

En dépit de la précision requise, l'usinage de l'organe dentaire en vue d'une transformation en un tronc de cône droit approché sur lequel la reconstitution métallique de l'organe dentaire doit venir s'emboîter à frottement doux doit être effectué à main levée, au moyen d'outils rotatifs. En effet, le volume à transformer est inaccessible aux machines-outils du type des toupies ou des tours. Les outils utilisés sont des fraises pour lesquelles un corps de fraise est solidaire d'un manche entraîné par un moyen approprié. Les procédés d'usinage connus à ce jour, qui comportent la taille de la dent sans ébauche préalable, ne permettent pas la certitude absolue de réussite du travail, d'une part en ce qui concerne la valeur de la conicité, et d'autre part en ce qui concerne l'emplacement de la limite inférieure de la taille.

L'invention a pour but de pallier ces inconvénients grâce à un procédé et à un outillage permettant d'obtenir un résultat beaucoup plus précis, et moins aléatoire.

Dans le cadre de l'instrumentation suivant l'invention, les séquences d'usinage de la dent doivent suivre une procédure définie par la morphologie du volume coronnaire. Le choix de l'instrumentation est induit par la dimension de ce volume coronnaire dans le sens vertical.

Un procédé suivant l'invention, pour le taillage d'une dent en vue de la pose d'une couronne prothétique, est caractérisé par les opérations successives suivantes :

a) taillage d'une gorge située à une distance constante de la base scellée de la dent ;

b) usinage du volume cuspidien délimité au-dessus de la gorge, à l'aide d'une fraise d'ébauche ; .

c) usinage du volume cervical délimité au-dessous de la gorge, à l'aide de la fraise d'ébauche, de manière à obtenir un trottoir d'épaulement périphérique inférieur ;

d) surfaçage des flancs du volume ébauché à l'aide d'une fraise dont une butée prend appui sur le trottoir d'épaulement ;

e) exécution d'un chanfrein sur le bord libre du trottoir à l'aide d'une fraise dont une première butée prend appui sur le trottoir et dont une deuxième butée, circulaire, prend appui sur les flancs usinés à l'opération d).

Suivant une caractéristique supplémentaire de l'invention, le taillage complet de la dent comprend :

- la succession complète des opérations a) à e) au niveau du flanc vestibulaire et du flanc lingual ;

- au niveau du flanc distal et du flanc mésial, deux usinages d'ébauche équivalents aux usinages des opérations b) et c) effectués sans l'aide de la gorge, suivis des opérations d) et e).

Suivant une variante de l'invention, les opérations a) à e) s'appliquent aux quatre flancs lingual, vestibulaire, distal et mésial de la dent.

Une fraise utilisée pour l'exécution de l'opération a) est caractérisée en ce qu'elle comprend un corps de fraise à surface active latérale monté sur l'extrémité d'un manche et solidaire, dans le prolongement du manche, d'une butée rectiligne à extrémité arrondie dont la longueur est au plus égale à la moitié de la distance qui sépare les sommets du volume sphérique approché de la dent considérée.

Une fraise utilisée pour l'exécution de l'opération b) et de l'opération c) est caractérisée en ce qu'elle a sensiblement la forme d'un diabolo, avec une surface latérale active et au moins une

0039300

4

arête à chaque extrémité de cette surface.

Une fraise utilisée pour l'exécution de l'opération d) est caractérisée en ce qu'elle comprend une surface latérale active tronconique à faible conicité, son extrémité de forte section étant solidaire de l'extrémité d'un manche, et son extrémité de faible section constituant une butée lisse.

Une fraise utilisée pour l'exécution de l'opération e) est caractérisée en ce qu'elle comprend, à partir de l'extrémité d'un manche : une surface cylindrique lisse de butée destinée à prendre appui sur la surface tronconique latérale de la dent ; une surface annulaire de butée destinée à prendre appui sur le trottoir d'épaulement de la dent ; au centre de cette surface annulaire plane, une partie active bombée, concave, convexe, ou à génératrice rectiligne.

Le dessin annexé, donné à titre d'exemple non limitatif, permettra de mieux comprendre les caractéristiques de l'invention.

- Figure 1 est une vue en perspective d'une mâchoire inférieure dont l'une des dents doit être pourvue d'une couronne prothétique.

- Figures 2 à 7 sont des vues partielles en perspective de la même mâchoire, illustrant les opérations successives du procédé suivant l'invention.

- Figure 8 est une vue en perspective de la même mâchoire dans son ensemble, après usinage de la dent.

- Figures 9 à 22 sont des vues latérales de différents types de fraises utilisables pour la mise en oeuvre du procédé suivant l' invention.

- Figures 23 à 29 sont des vues latérales montrant, sur une dent en cours de taillage, les différentes opérations du procédé suivant l'invention.

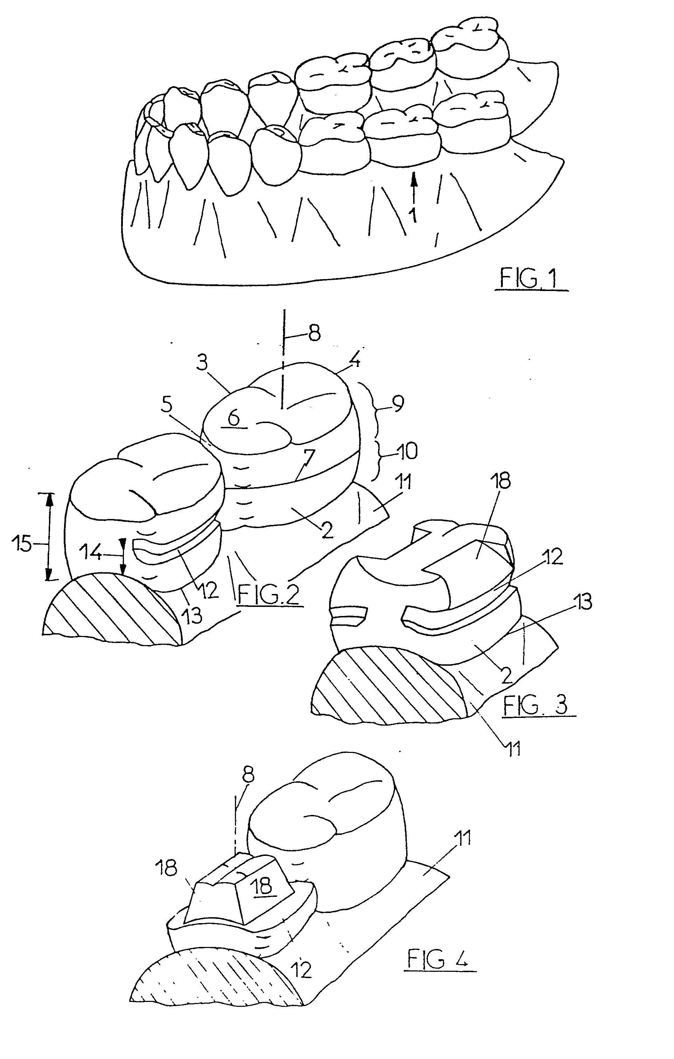

On a représenté sur la figure 1 une mâchoire dans laquelle la molaire 1 doit faire l'objet d'un taillage en vue de la pose d' une couronne prothétique. Pour la clarté de cette description, on rappelle que la terminologie suivante est adoptée pour désigner les différentes parties de la dent qui nous intéressent :

- Chaque dent comporte une face vestibulaire 2, tournée du côté de la joue (fig 2), une face linguale ou palatine 3 tournée du côté de la langue, une face distale 4 orientée vers la dent postérieure de l'arcade dentaire à laquelle appartient la dent considérée, et une face mésiale 5 orientée vers la dent antérieure de l'arcade dentaire à laquelle appartient la dent considérée, ces faces constituant les quatre faces "verticales" de la dent. En réalité, pour les molaires et les prémolaires, ces faces sont convexes, et on peut alors assimiler la dent à un volume sphérique approché amputé, à la base et au sommet, d'un segment sphérique.

- La face occlusale ou cuspidienne 6 est la face supérieure de la dent.

- Une ligne imaginaire 7 de plus grand contour du volume sphérique approché, située sensiblement à mi-hauteur dudit volume sphérique amputé des deux segments sphériques, et qui définit un plan sensiblement perpendiculaire à l'axe général 8 de la dent, délimite elle-même deux zones anatomiques qui sont d'une part le volume cuspidien ou occlusal 9 situé au-dessus de ce plan, et d'autre part le volume cervical ou gingival 10 situé au-dessous de ce plan, du côté de la gencive 11.

Comme on l'a déjà précisé, le procédé suivant l'invention a pour but d'effectuer sur la dent un travail de taillage qui consiste dans la transformation d'un volume sphérique approché en un tronc de cône droit permettant l'assise d'une couronne prothétique assurant ultérieurement la reconstitution d'une dent complète.

Le procédé suivant l'invention comprend les opérations successives suivantes :

a) <u>Taillage d'une gorge d'induction ou de guidage (fig 2)</u>

Cette opération consiste à tailler sur la face vestibulaire 2 et sur la face linguale 3 de la dent une gorge linéaire 12 située à une distance constante de la base scellée 13 du volume sphérique approché de la dent, cette distance 14 étant au plus égale à la moitié de la hauteur 15 séparant les extrémités haute et basse du volume sphérique approché. On utilise pour cela une fraise 16 qui est guidée automatiquement par un appui sur le bord de la gencive, à la base du volume cervical de la dent (fig 23).

Dans la mesure où on dispose d'intervalles suffisamment larges entre les dents, on peut effectuer le même travail au niveau des faces distales 4 et mésiale 5 de la dent 1.

b) <u>Usinage du volume cuspidien (fig 3)</u>

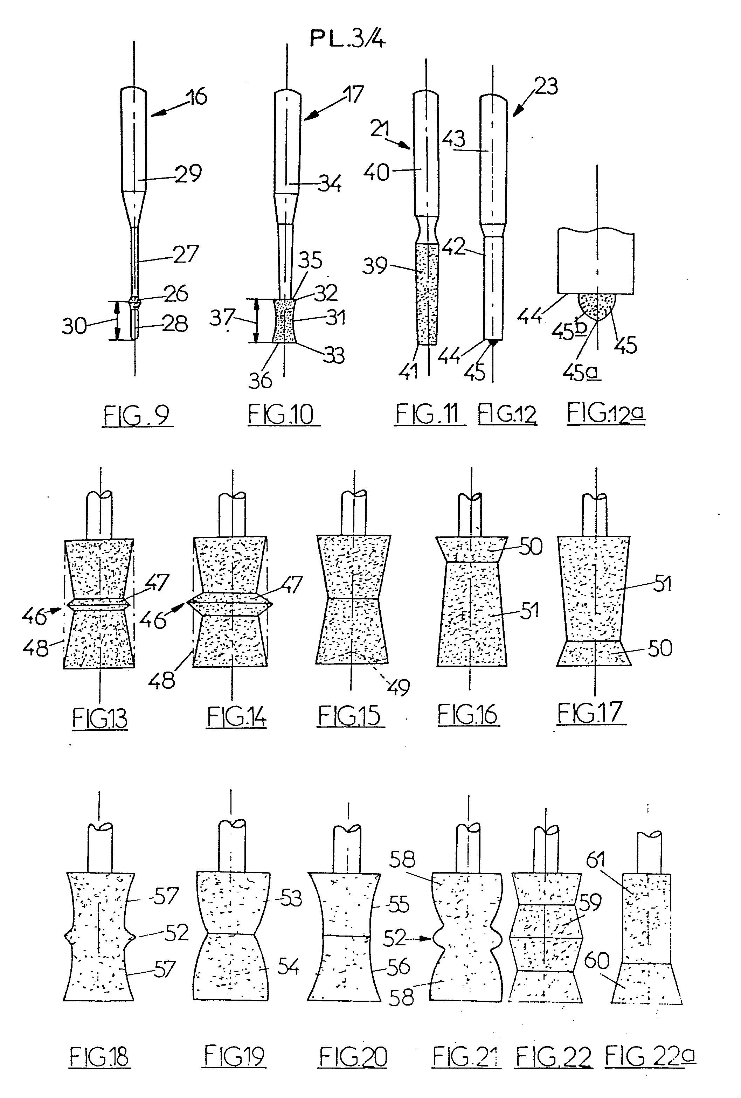

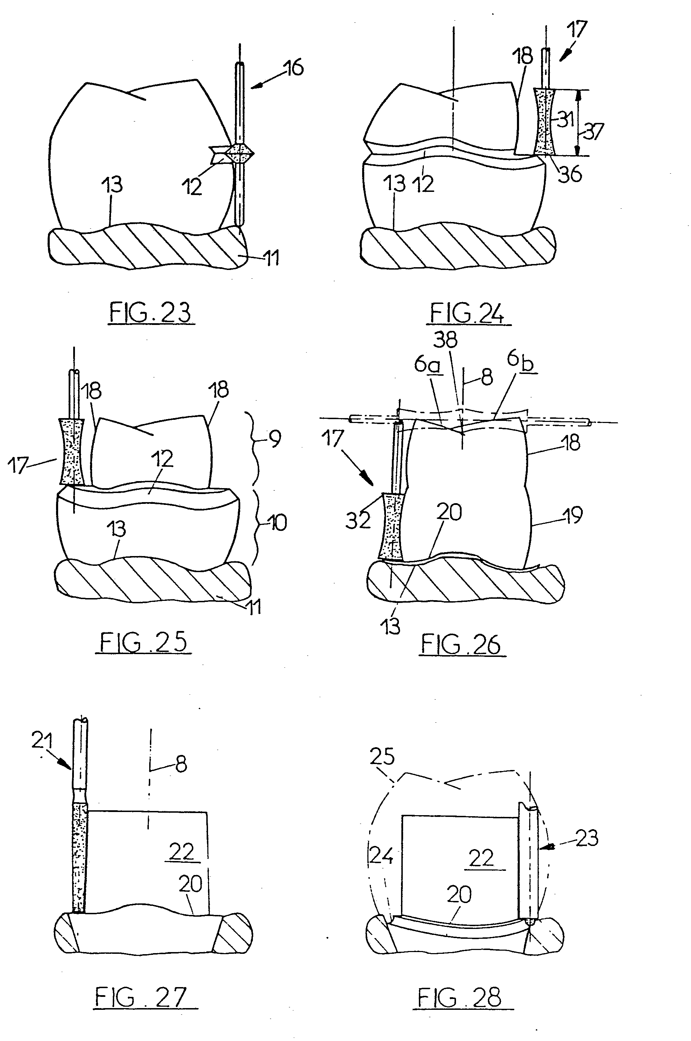

Le volume cuspidien délimité au-dessus de la gorge 12 est usiné méthodiquement à l'aide d'une fraise d'ébauche 17 (fig 24). Cet usinage 18 est poursuivi sur toute la périphérie de la dent, c'est-à-dire également au niveau des faces distale 4 et mésiale 5,

même si ces dernières n'ont pas pu être pourvues d'une gorge de guidage en raison du rapprochement des dents adjacentes (fig 4 et 25).

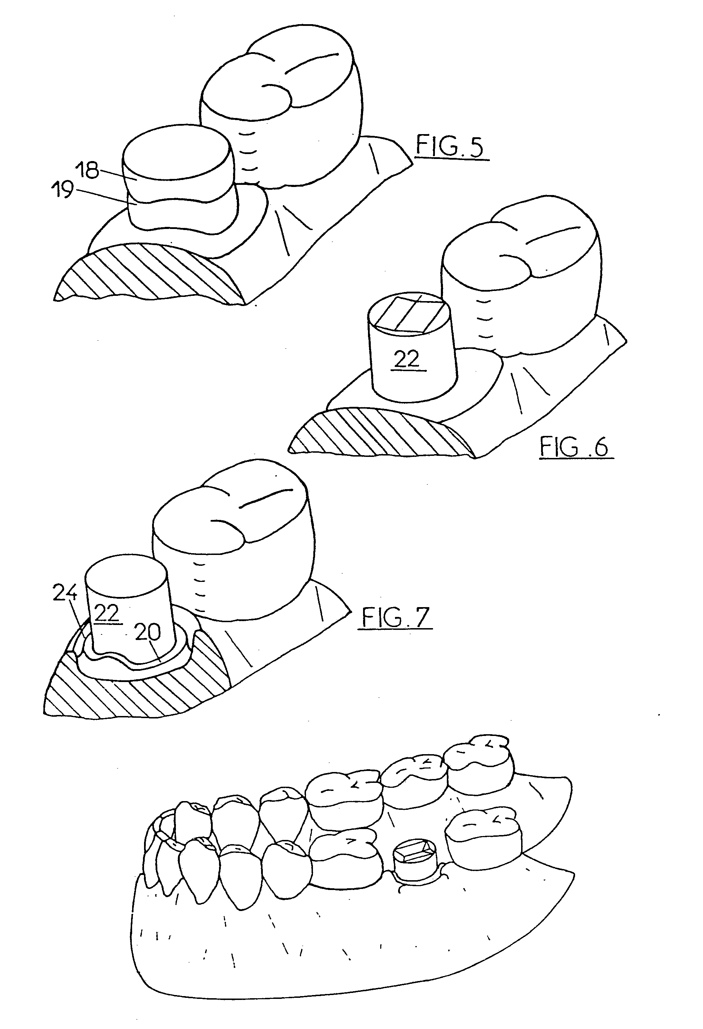

c) <u>Usinage du volume cervical (fig 5)</u>

La même fraise d'ébauche 17 (fig 26) est utilisée pour usiner le volume cervical délimité au-dessous de la gorge 12, et pour étendre cet usinage 19 à toute la périphérie de la dent. Tout en effectuant l'ébauche de la taille des flancs de la dent, on usine un trottoir d'épaulement périphérique 20. La précision de cet usinage est obtenue par l'utilisation d'une fraise 17 de hauteur appropriée, grâce à la présence de la gorge 12 située à distance constante de la base cervicale de la dent.

d) <u>Surfaçage des flancs (fig 6)</u>

A l'aide d'une fraise 21 qui prend appui sur le trottoir 20, on procède à un usinage de finition, ou surfaçage, des flancs de la dent (fig 27). Au cours de cette opération, les surfaces en contre-dépouille issues des usinages d'ébauche des opérations b) et c) doivent être éliminées, et on obtient un tronc de cône droit 22 qui va en s'évasant en sens inverse de la fraise 21, mais dont la conicité est, en valeur absolue, la même que celle de la fraise 21 dont l'extrémité axiale bute contre le trottoir 20.

e) <u>Chanfreinage (fig 7)</u>

A l'aide d'une fraise 23 pourvue d'une surface d'appui latérale en contact avec le tronc de cône 22 et d'une surface d'appui transversale en contact avec le trottoir 20, on taille un chanfrein 24 (fig 28). La fraise 23, à "pointe de canne", permet d'obtenir un chanfrein régulier, de hauteur et de largeur constantes sur toute la périphérie de la dent. Au cours de cette opération, le bord de la dencive 11 est repoussé vers l'extérieur, ou légèrement cureté. Un tel curetage rotatif est connu pour être bénéfique. La gencive pourra par la suite reprendre sa place normale autour du bord inférieur aminci de la couronne prothétique 25.

La figure 8 offre un aspect de la mâchoire dans laquelle la dent 1 taillée est prête à recevoir la couronne.

La suite de la présente description concerne les différents types de fraises réalisées en vue de la mise en oeuvre du procédé suivant l'invention.

La fraise 16 utilisée pour l'exécution de l'opération a) et représentée sur la figure 9 comprend un corps de fraise 26 à surface latérale active disposé entre deux surfaces cylindriques lisses d' appui 27 et 28 coaxiales avec un manche 29. Les surfaces 27 et 28 peuvent être de même diamètre. La surface d'appui 27 s'étend entre l'extrémité axiale du manche 29 et le corps de fraise 26, alors que l'extrémité libre de la surface 28 peut être arrondie. La distance 30 entre cette extrémité libre et le milieu du corps de fraise 26 est au plus égale à la moitié de la hauteur totale du volume sphérique approché de la dent à usiner.

Le corps de fraise 26 peut être conçu de différentes manières. Le dessin montre un corps comprenant deux parties symétriques l'une de l'autre par rapport au plan passant par le milieu du corps de fraise, les deux parties à génératrice concave étant séparées l'une de l'autre par une arête, mais cette disposition n'est pas limitative, puisqu'on pourrait tout aussi bien concevoir une fraise dont le corps ne présente aucune symétrie, aucune arête, et des génératrices concaves, convexes, en ligne brisée, et autres.

Pour utiliser cette fraise, on place son extrémité arrondie en léger appui sur le bord de la gencive, le long de la ligne où sera par la suite taillé le trottoir 20, cette ligne étant ainsi habituellement la ligne de jonction gencive-dent, et le corps de fraise usine la gorge 12 à mi-hauteur (fig 23). De ce fait, la gorge 12 reste en tous points à égale distance de la ligne définie par la gencive 11 le long de la dent 1. Dans le cas où l'usinage de la gorge 12 est rendu impossible sur toute la périphérie de la dent à tailler en raison de la présence des dents voisines, on effectue la taille de façon que les portions vestibulaires et linguales de la gorge 12 s'arrêtent mésialement et distalement à l'aplomb des rétrécissements de la dent au niveau gingival.

La fraise 17 utilisée pour l'exécution des opérations b) et c), et représentée sur la figure 10, possède un corps de fraise qui affecte la forme d'un diabolo, avec une gorge 31 à génératrice concave située entre deux arêtes d'extrémité 32 et 33. L'arête 32 située du côté du manche 34 de l'outil est adjacente à une surface annulaire 35 qui, comme la gorge 31, peut être abrasive. Par contre, la face d'extrémité 36 située au-delà de l'arête 33 peut être une face lisse.

Pour utiliser cette fraise, à l'opération b), on place sa face d'appui 36 en contact avec la surface de la gorge 12 (fig 24). La distance 37 qui sépare les deux arêtes 32 et 33 l'une de l'autre étant sensiblement égale à la moitié de la hauteur totale du volume sphérique approché de la dent, l'usinage s'effectue en maintenant l'axe de la fraise sensiblement parallèle à l'axe de la future couronne prothétique, ou en légère convergence avec cet axe, la génératrice active de la gorge 31 devant rester "parallèle" à la corde sustendant le volume sphérique approché de la dent dans la portion cuspidienne. La profondeur de l'usinage 18 réalisé est égale au diamètre du corps de fraise au niveau des arêtes, ou de la gorge.

Cette fraise est également utilisable pour l'usinage de la face occlusale 6 de la dent. Dans ce cas, c'est le sillon médian à orientation mésio-distal 38 de la face occlusale de la dent 1 qui est utilisé comme gorge d'induction et de guidage (fig 26). Le manche de la fraise est alors orienté parallèlement à la moitié considérée de la face occlusale 6. Ainsi, pour l'usinage de la moitié linguale 6a de la face occlusale, le manche de la fraise est orienté lingualement, alors que le corps de fraise est orienté vestibulairement, tandis que pour l'usinage de la moitié vestibulaire 6b de la face occlusale, le manche de la fraise est orienté vestibulairement et le corps de fraise lingualement. Dans les deux cas, on engage la face d'appui 36 de la fraise 17 dans le sillon médian 38 pour usiner des gorges horizontales, en choisissant soit le diamètre des arêtes 32 et/ou 33 (ces arêtes n'ayant pas forcément le même diamètre), soit le diamètre de la gorge 31 comme guide de profondeur d'usinage. Les gorges usinées se rejoignent dans un mouvement de translation horizontale, suivant la morphologie des pentes et des bombés cuspidiens de la face 6. On obtient ainsi, sans ébauche préalable, l'usinage terminal de la face 6 à la profondeur choisie.

L'usinage préalable du volume cuspidien améliore la vision en direction du volume cervical, et permet un meilleur accès à ce volume cervical, chose particulièrement appréciable vis-à-vis de la ligne de jonction gencive-dent à laquelle on doit prêter une attention toute particulière, d'une part pour ne pas blesser inutilement la gencive, et d'autre part pour obtenir la meilleure précision possible pour le positionnement de la ligne de jonction et de finition de la future couronne prothétique.

Pour usiner le flanc vestibulaire cervical, on place l'axe de la fraise en parallélisme avec l'axe d'insertion de la future couronne, ce dernier coïncidant avec l'axe général 8 de la dent (voir fig 5 et 26). Au cours de ce travail, l'arête 32 du corps de fraise est engagée dans la gorge 12 usinée à l'opération a). Dans chaque portion extrême de l'usinage effectué, on fait pénétrer la fraise en profondeur par un mouvement horizontal d'amplitude appropriée. En maintenant toujours l'axe de la fraise dans la même orientation, et en continuant à se guider sur la gorge 12, on effectue un mouvement de translation permettant aux usinages effectués de se rejoindre tout autour de la dent. On a ainsi réalisé l'ébauche de l' usinage de la partie inférieure du tronc de cône droit approché, en même temps qu'un trottoir d'épaulement périphérique 20 de la profondeur appropriée, à la hauteur choisie initialement, dans un plan perpendiculaire à l'axe général de la dent. L'ensemble du travail est réalisé sans lésion gingivale inconsidérée, en employant la même méthode pour les quatre flancs de la dent.

La fraise 21 utilisée pour l'exécution de l'opération d), et représentée sur la figure 11, comprend une surface latérale active tronconique 39 à faible conicité dont l'extrémité de plus forte section est solidaire de l'extrémité d'un manche 40 et dont l'extrémité libre de plus faible section constitue une surface d'appui transversale lisse 41. Cette surface 41, concave ou convexe, doit présenter la même forme que la face 36 de la fraise 17.

Pour utiliser la fraise 21, on place la surface 41 en appui sur le trottoir 20 (fig 27) en maintenant l'axe de la fraise en parallélisme avec l'axe général 8 de la dent. Un mouvement circulaire de la fraise 21 en appui sur le trottoir 20 permet le surfaçage d' une surface tronconique par le flanc abrasif de l'instrument. La conicité de la surface tronconique obtenue est égale à celle du flanc abrasif de la fraise 21.

Le fait de prévoir une surface d'appui 41 de forme bombée permet de réduire les frottements, et est donc avantageux pour réduire l'échauffement.

La fraise 23 utilisée pour l'exécution de l'opération e), et représentée sur la figure 12, comprend, à partir de l'extrémité axiale d'un manche 42 : une surface cylindrique lisse de butée 43, une surface annulaire plane lisse de butée 44, et une partie abrasive bombée 45, dite "pointe de canne" ou "bec de canne", située au centre de la surface 44. La surface 44 peut présenter une extrémité 45a pointue ou arrondie (fig 12a), et une génératrice 45b convexe, concave, rectiligne, ou en ligne brisée.

En service, l'axe de cette fraise est maintenu en parallélisme avec l'axe général 8 de la dent, la surface cylindrique 43 est maintenue en appui contre la surface tronconique 22 précédemment usinée sur la dent, et la surface annulaire 44 est maintenue en appui contre le trottoir 20 de la dent (fig 28). Cette fraise permet d'usiner un chanfrein de direction, de hauteur et de largeur constantes, chose impossible à obtenir avec les méthodes employées jusqu'alors.

Les figures 13 et suivantes montrent différentes fraises suivant des variantes de l'invention, pouvant être utilisées en remplacement des fraises déjà décrites pour la mise en oeuvre des opérations a) à c).

Les surfaces actives de la fraise de la figure 13 affectent une forme en diabolo, avec à mi-hauteur un bourrelet annulaire 46 pourvu d'une arête 47 dans son plan de symétrie. Cette arête 47 est située à l'intérieur du cylindre imaginaire 48 construit à partir des extrémités axiales du corps de fraise. La figure 14 montre une fraise sensiblement similaire dans laquelle l'arête 47 est située à l'extérieur du cylindre 48. Dans les deux cas, le bourrelet annulaire 46 comprend deux surfaces dont les génératrices peuvent être, suivant le cas : rectilignes, convexes ou concaves.

La fraise de la figure 15 comporte un corps en forme de diabolo avec, à son extrémité libre, une face conique concave 49.

La fraise de la figure 16 comporte un corps en forme de diabolo asymétrique, qui comporte, du côté du manche, une surface abrasive tronconique 50 de forte conicité de longueur relativement petite, et, du côté de l'extrémité libre de la fraise, une surface abrasive tronconique 51 de faible conicité de longueur relativement grande. Le corps de la fraise de la figure 17 comporte également un corps en forme de diabolo asymétrique, mais les orientations des surfaces 50 et 51 sont inverses des précédentes.

La fraise de la figure 18 comporte un corps en forme de diabolo muni, comme les fraises des figures 13 et 14, d'un bourrelet annulaire situé sensiblement à mi-hauteur. Les surfaces extrêmes 57 du corps de fraise sont concaves et, étant donné que toutes les génératrices de ce corps sont des courbes, il n'y a aucune arête au niveau du bourrelet 52.

La fraise de la figure 19 comporte un corps en forme de diabolo qui comprend deux surfaces abrasives à génératrices convexes 53 et 54.

La fraise de la figure 20 comporte toujours un corps en for- ne de diabolo, mais avec deux surfaces abrasives 55 et 56 à génératrices concaves.

La fraise de la figure 21 se rapproche de celle de la figure 18 en ce qu'elle comporte également un corps en forme de diabolo avec un bourrelet annulaire 52 dépourvu d'arête. Cependant, alors que les génératrices des surfaces extrêmes 57 du corps de fraise de la figure 18 sont concaves, les surfaces extrêmes 58 du corps de fraise de la figure 21 sont convexes.

La fraise de la figure 22 comporte un corps de fraise muni de quatre surfaces abrasives tronconiques à génératrices rectilignes formant ensemble un double diabolo, avec une arête vive centrale 59.

La fraise de la figure 22a présente une seule arête, et une seule surface évasée 60, ainsi qu'une portion cylindrique 61.

On ne sortirait pas du domaine de l'invention en réalisant d'autres versions légèrement modifiées de ces fraises, en s'inspirant par exemple des formes suivantes :

- Fraises comportant une surface latérale abrasive dont les deux zones principales sont évasées en sens inverses l'une de l'autre, avec éventuellement un bourrelet annulaire à la jonction de ces deux zones principales.

- Fraises en forme de diabolo, avec deux arêtes d'extrémité dont l'une est d'un diamètre supérieur au diamètre de l'autre.

- Fraises en forme de diabolo, avec deux zones qui vont en s'évasant en sens inverses l'une de l'autre de part et d'autre d'une zone centrale cylindrique.

12

REVENDICATIONS

1 - Outillage de dentiste pour la standardisation et la préparation des dents en vue de la pose des couronnes , caractérisé en ce qu'il comprend un jeu de plusieurs fraises dont l'une au moins a la forme d'un diabolo , tandis que l'une au moins comporte une surface latérale abrasive et une surface terminale transversale pour former butée.

2 - Fraise de dentiste formant partie de l'outillage suivant la revendication 1 , caractérisée en ce qu'elle comprend un corps de fraise à surface latérale active disposée entre deux surfaces cylindriques d'appui coaxiales avec le manche de la fraise , l'une de ces surfaces d'appui s'étendant entre l'extrémité axiale du manche et le corps de la fraise , la distance entre l'extrémité libre de l'autre surface d'appui et le milieu du corps de fraise étant environ égale à la moitié de la hauteur totale du volume sphérique approché de la dent à usiner , cette fraise taillant une gorge située à une distance constante de la base scellée de la dent.

3 - Fraise de dentiste faisant partie de l'outillage suivant la revendication 1 , caractérisée en ce qu'elle comprend une surface latérale abrasive avec au moins une zone principale évasée en direction d'une extrémité de la fraise , cette zone principale évasée étant adjacente , par son extrémité de plus fort diamètre , à une arête d'extrémité de la fraise , cette fraise servant à l'usinage du volume cuspidien délimité au-dessus de la gorge et à l'usinage du volume cervical délimité au-dessous de la gorge , de manière à obtenir un trottoir d'épaulement.

4 - Fraise suivant la revendication 3 , caractérisée en ce qu'elle a sensiblement la forme d'un diabolo , avec une surface latérale abrasive et au moins une arête à chaque extrémité de cette surface.

5 - Fraise suivant la revendication 3 , caractérisée en ce qu'elle comporte une surface latérale abrasive comprenant une zone évasée unique et une zone cylindrique , avec une unique arête située à l'extrémité libre de la zone évasée.

6 - Fraise suivant la revendication 4 , caractérisée en ce que la surface latérale abrasive comprend deux zones principales évasées de part et d'autre d'une zone intermédiaire cylindrique.

7 - Fraise suivant la revendication 3 , caractérisée en ce

13

comporte deux zones principales évasées en sens inverse l' une de l'autre et adjacentes , à leurs extrémités libres respectives , à deux arêtes dont l'une est d'un diamètre supérieur au diamètre de l'autre.

8 - Fraise suivant la revendication 3 , caractérisée en ce qu'elle comporte deux zones principales évasées en sens inverse l'une de l'autre ,de part et d'autre d'un bourrelet annulaire pourvu d'une arête dans son plan de symétrie.

9 - Fraise suivant la revendication 3 , caractérisée en ce qu'elle comporte deux zones principales évasées de part et d'autre d'un bourrelet annulaire , la surface latérale de la fraise ne présentant aucune arête.

10 - Fraise suivant l'une quelconque des revendications 3 à 9 , caractérisée en ce qu'elle comporte , sur sa surface latérale abrasive , au moins une zone évasée à génératrice rectiligne.

11 - Fraise suivant l'une quelconque des revendications 3 à 9 , caractérisée en ce qu'elle comporte , sur sa surface latérale abrasive , au moins une zone évasée à génératrice concave.

12 - Fraise suivant l'une quelconque des revendica - tions 3 à 9 , caractérisée en ce qu'elle comporte , sur sa surface latérale abrasive , au moins une zone évasée à géné- ratrice convexe.

13 - Fraise de dentiste , formant partie de l'outillage suivant la revendication 1 , caractérisée en ce qu'elle comprend une surface latérale abrasive tronconique à faible conicité dont l'extrémité de plus forte section est solidaire de l'extrémité axiale d'un manche et dont l'extrémité de plus faible section constitue une surface d'appui lisse,cette fraise réalisant le surfaçage des flancs du volume déjà ébauché à l'aide d'une fraise diabolo.

14 - Fraise de dentiste formant partie de l'outillage suivant la revendication 1 , caractérisé en ce qu'elle comprend , à partir de l'extrémité axiale d'un manche : une surface de butée cylindrique ou tronconique , destinée à prendre appui sur la surface latérale tronconique de la dent ; une surface annulaire lisse de butée destinée à prendre appui sur trottoir d'épaulement de la dent ; au centre de cette surface annulaire plane , une partie abrasive susceptible de comporter une génératrice rectiligne , concave , ou convexe , cette fraise réalisant un chanfrein sur le bord libre du trottoir.

15 - Fraises suivant les revendications 3 et 14 , caractérisées en ce que la forme d'une surface abrasive prévue à l'extrémité axiale de la première correspond à la forme de la surface annulaire lisse de butée de la deuxième fraise.

16 - Fraise de dentiste suivant la revendication 2, caractérisée en ce que les deux surfaces cylindriques d'appui sont lisses.

FIG. 1

FIG. 2

FIG. 3

FIG 4

FIG.5

18

19

22

FIG.6

24

22

20

FIG.7

0039300

PL.3/4

FIG.9  FIG.10  FIG.11  FIG.12  FIG.12a

FIG.13  FIG.14  FIG.15  FIG.16  FIG.17

FIG.18  FIG.19  FIG.20  FIG.21  FIG.22  FIG.22a

FIG.23

FIG.24

FIG.25

FIG.26

FIG.27

FIG.28

**0039300**

Numéro de la demande

EP 81 42 0057

Office européen
des brevets

**RAPPORT DE RECHERCHE EUROPEENNE**

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| X | DE - A - 2 012 268 (SCHNITZER)<br>* Page 10, dernière alinéa;<br>page 11; figures *<br><br>-- | 1,3,4,<br>5,13,<br>15 | A 61 C 3/02 |
| | US - A - 2 855 673 (GRUENWALD)<br>* La totalité du brevet; figures *<br><br>-- | 1,13 | |
| | BE - A - 845 059 (SMIT)<br>* Page 3, alinéa 3; figure *<br><br>-- | 3,4,6,<br>11 | DOMAINES TECHNIQUES RECHERCHES (Int. Cl.³)<br><br>A 61 C |
| | DE - A - 1 516 443 (REYNAUD)<br>* Page 5, lignes 13-22; figure 1 *<br><br>---- | 2,16 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 22-07-1981 | VANRUNXT |

OEB Form 1503.1 06.78